# EUROPÄISCHE PATENTSCHRIFT

(11) **EP 0 931 232 B1**
(45) Veröffentlichungstag und Bekanntmachung des Hinweises auf die Patenterteilung: **28.06.2000**
(21) Anmeldenummer: 98901293.5
(22) Anmeldetag: 06.02.1998
(51) Int. Cl.: F16L 23/028

(54) **ZWEITEILIGER SICHERHEITS-LOSFLANSCH**
TWO-PIECE LOOSE FLANGE
BRIDE PLATE TOURNANTE DE SECURITE EN DEUX PARTIES

(30) Priorität: 26.02.1997 CH 46297; 26.02.1997 CH 46397
(43) Veröffentlichungstag der Anmeldung: 28.07.1999
(73) Patentinhaber: Etoile Holding AG, 4107 Ettingen (CH)
(72) Erfinder: SEEDORFF, Peter, CH-4107 Ettingen (CH)
(74) Vertreter: Bollhalder, Renato
(86) Internationale Anmeldenummer: CH9800045
(87) Internationale Veröffentlichungsnummer: WO9838446

(56) Entgegenhaltungen:
- EP-A- 0 523 518
- WO-A-86/00971
- DE-A- 19 514 003
- FR-A- 1 206 231

## Beschreibung

Die vorliegende Erfindung bezieht sich auf einen zweiteiligen Losflansch, wie er im Oberbegriff des unabhängigen Patentanspruchs 1 definiert ist.

Losflansche werden insbesondere zur Verbindung von Bauteilen, z.B. Rohren, eingesetzt, die mit Bunden als Auflage für die Losflansche versehen sind. Hierzu werden ein auf dem Bund eines ersten Bauteils aufliegender Losflansch und ein auf dem Bund eines zweiten Bauteils aufliegender Losflansch mittels Verbindungsschrauben miteinander verschraubt, so dass sie die zumischen ihnen liegenden Bunde und damit die Bauteile zusammenpressen. Zwischen den Bunden ist eine Dichtung angeordnet, die für eine Abdichtung sorgt und bei genügend dicker Ausgestaltung, z.B. in Form eines Stahlwellrings, auch die Rückstellkräfte erzeugt, die für die stabile Verschraubung der Losflansche unter wechselnden Betriebsbedingungen notwendig sind.

Es sind Losflansche bekannt, die aus zwei Flanschhälften bestehen, die sich in zwei Überlappungsbereichen überlappen und dort mittels relativ kleiner Flanschschrauben miteinander verschraubt sind. Ausserhalb der Überlappungsbereiche weisen diese Losflansche Schraubenlöcher für Verbindungsscnrauben auf, die zur Verbindung des Losflansches mit einem weiteren Losflansch oder einem anderen Verbindungsteil dienen.

Diese Losflansche weisen den Nachteil auf, dass beim Verbinden zweier Losflansche oder eines Losflansches mit einem anderen Verbindungsteil durch das Anziehen der Verbindungsschrauben auf die Verbindung der beiden Flanschhälften Kipp- und Scherkräfte ausgeübt werden, die nur ein begrenztes Anziehen der Verbindungsschrauben zulassen, da ansonsten die Flanschschrauben reissen. Zudem sind solche Losflanschverbindungen bezüglich der Hauptkräfte, d.h. der Klemmkräfte, und der Nebenkräfte, d.h. der Kipp- und Scherkräfte sowie der von den Bauteilen herrührenden Kräfte, nicht berechenbar.

In der EP-A-0 523 518 sind Losflansche beschrieben, die in den beiden Überlappungsbereichen ineinandergreifende Profile aufweisen. Auch diese Losflansche sind mit den oben genannten Nachteilen verbunden. Insbesondere wirken beim Anziehen der Verbindungsschrauben Scherkräfte auf die Flanschhälften, die nicht berechenbar sind und durch die ineinandergreifende Profile höchstens teilweise aufgefangen werden, da die Profile in den Überlappungsbereichen nicht durch Schrauben aneinandergepresst werden.

Aus der WO 86/00971 sind Losflansche bekannt, die in den beiden Überlappungsbereichen nicht mittels kleiner Flanschschrauben miteinander verschraubt sind, sondern dort ebenfalls Schraubenlöcher für Verbindungsschrauben aufweisen. Dadurch, dass bei einer Verbindung des Losflansches mit einem weiteren Losflansch in jedem der beiden Überlappungsbereiche mindestens eine Verbindungsschraube angeordnet ist, können alle Verbindungsschrauben, d.h. auch diejenigen, die in Verbindungsschraubenlöchern ausserhalb der Überlappungsbereiche angeordnet sind, wesentlich stärker angezogen werden, ohne dass die Gefahr des Kippens der beiden Flanschhälften besteht. Beim Anziehen der Verbindungsschrauben wirken aber weiterhin ungehindert Scherkräfte auf die Flanschhälften, die nicht berechenbar sind und zum Teil durch die Verbindungsschrauben aufgefangen werden müssen.

Angesichts der Nachteile der bisher bekannten, oben beschriebenen Losflansche liegt der Erfindung die Aufgabe zugrunde, einen Losflansch der eingangs erwähnten Art zu schaffen, bei dem die beim Anziehen der Verbindungsschrauben auf die Flanschhälften wirkenden Scherkräfte durch die beiden Flanschhälften selbst kompensiert werden.

Diese Aufgabe wird durch den erfindungsgemässen Losflansch gelost, wie er im unabhängigen Patentanspruch 1 definiert ist. Patentanspruch 8 bezieht sich auf eine erfindungsgemässe Verwendung des Losflansches. Bevorzugte Ausfuhrungsvarianten ergeben sich aus den abhängigen Patentansprüchen.

Das Wesen der Erfindung besteht darin, dass bei einem zweiteiligen Losflansch mit zwei sich in zwei überlappungsbereichen überlappenden Flanschhälften und mindestens vier Schraubenlöchern für Verbindungsschrauben, die zur Verbindung des Losflansches mit einem weiteren Losflansch oder einem anderen Verbindungsteil dienen, wobei in beiden Überlappungsbereichen ein Verbindungsschraubenloch angeordnet ist, die beiden Flanschhälften in den Überlappungsbereichen einen Stufenübergang in Form von stufen- oder zahnartig ineinandergreifenden Profilen zum Auffangen der beim Anziehen der Verbindungsschrauben auf die Flanschhälften wirkenden Scherkräfte aufweisen, wobei mindestens ein Verbindungsschraubenloch durch einen Stufenübergang verläuft.

Dank den Auffangen der Scherkräfte durch stufen- oder zahnartig ineinandergreifende Profile sind Verbindungen erfindungsgemässer Losflansche berechenbarer. Die Scherkräfte müssen ausserdem nicht durch die Verbindungsschrauben kompensiert werden, so dass diese weniger stark belastet werden.

Beim erfindungsgemässen Losflansch sind die Losflanschverbindungen bezüglich der Haupt- und der Nebenkräfte zumindest teilweise berechenbar.

Im folgenden wird der erfindungsgemässe Losflansch unter Bezugnahme auf die beigefügten Zeichnungen und anhand eines Ausführungsbeispiels detaillierter beschrieben. Es zeigen:

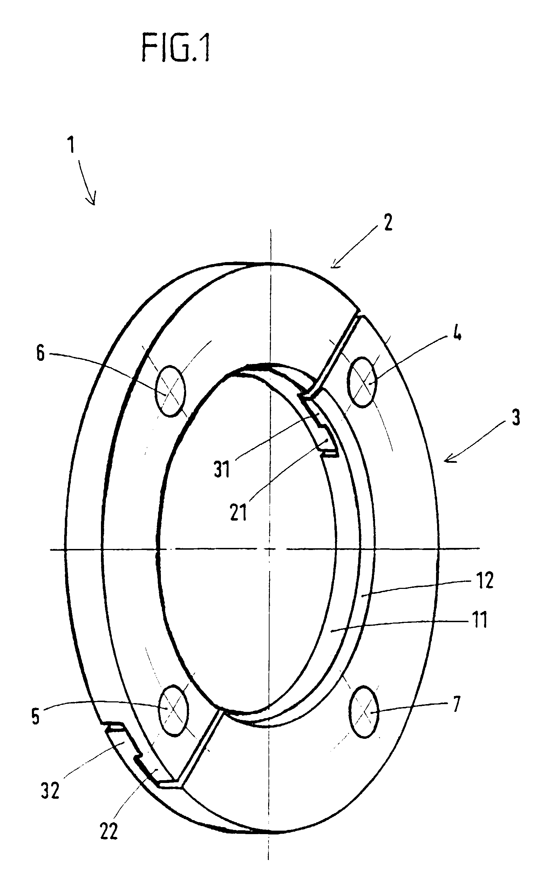

- Fig. 1 -: eine Perspektivansicht eines erfindungsgemässen Losflansches mit Überlappungsbereichen mit stufenartigen Profilen;

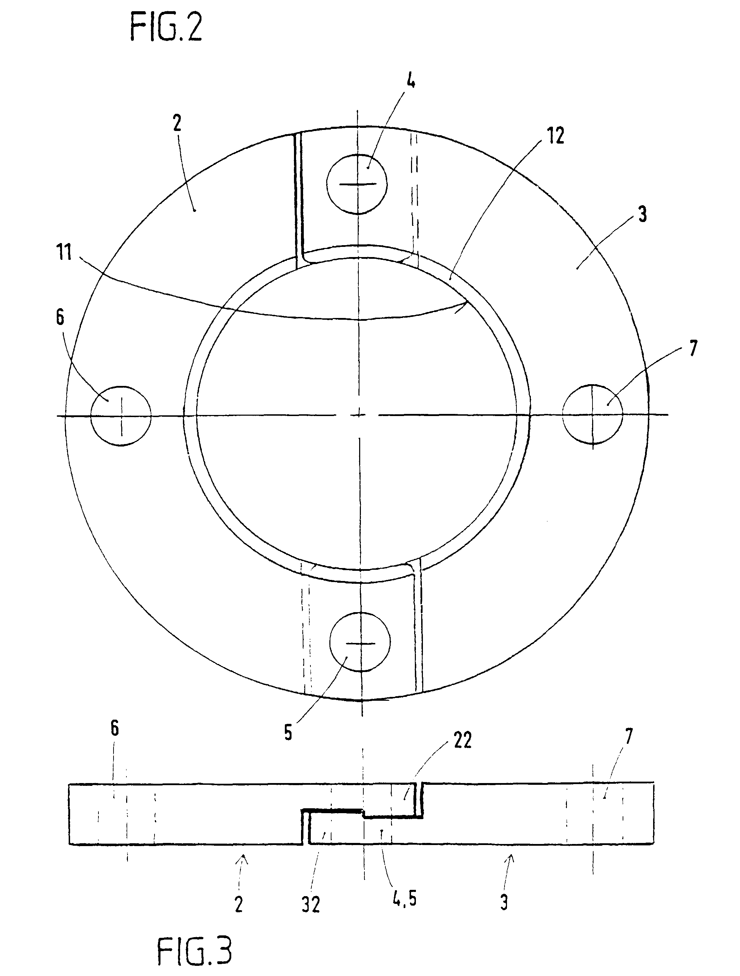

- Fig. 2 -: eine Draufsicht auf den Losflansch von Fig. 1;

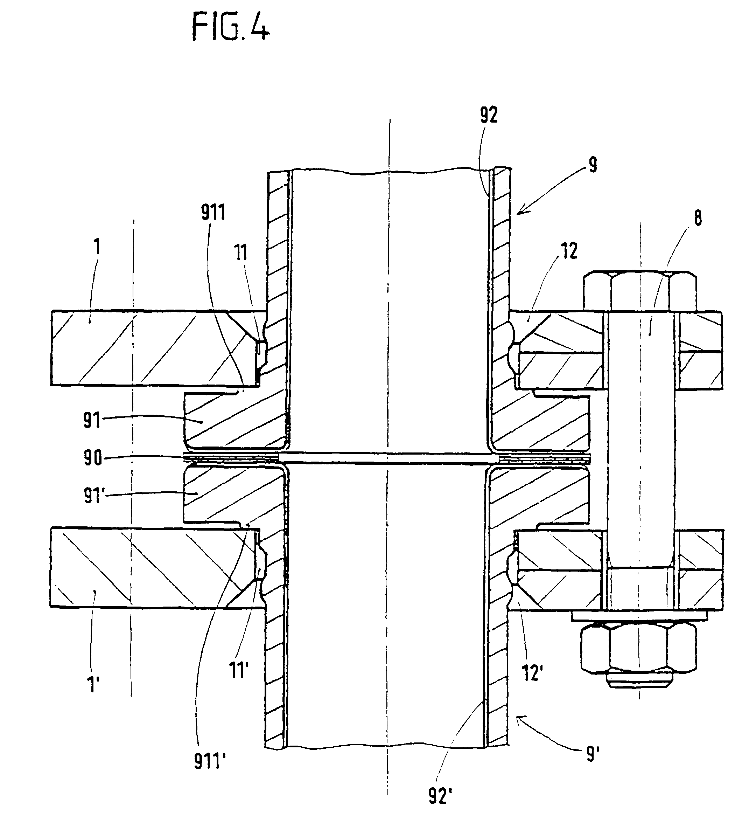

- Fig. 3 -: eine Seitenansicht des Losflansches von Fig. 1 und
- Fig. 4 -: die Verwendung zweier Losflansche gemäss Fig. 1 zur Verbindung zweier stahlemaillierter Rohre.

### Figuren 1 bis 3

Der dargestellte erfindungsgemässe Losflansch 1 besteht aus zwei Flanschhälften 2 und 3, die sich in zwei Überlappungsbereichen überlappen. In jedem der beiden Überlappungsbereiche ist ein Verbindungsschraubenloch 4 bzw. 5 angeordnet, das die beiden Flanschhälften 2, 3 durchquert. Um 90° dazu versetzt, ist in der Flanschhälfte 2 ein weiteres Verbindungsschraubenloch 6 und in der Flanschhälfte 3 ein weiteres Verbindungsschraubenloch 7 angeordnet. Der Durchmesser der Verbindungsschraubenlöcher 4 bis 7 beträgt beispielsweise bei inneren Flanschdurchmessern von 35 bis 230 mm und bei äusseren Flanschdurchmessern von 100 bis 350 mm zwischen ca. 14 und 25 mm.

Die Überlappungsbereiche der beiden Flanschhälften 2, 3 weisen stufenartige, ineinandergreifende Profile 21, 22, 31, 32 auf, die zum Auffangen der Scherkräfte dienen.

Die Innenseite des Losflansches 1 besteht aus einer zylinderförmigen Seitenfläche 11 und einer trichterförmigen Abschrägung 12.

### Figur 4

Zwei Losflansche 1 und 1' dienen hier dazu, zwei Rohrenden 9 und 9' aneinander zu pressen. Die Rohrenden 9, 9' sind mit Bunden 91 bzw. 91' versehen, die Ringschultern 911 bzw. 911' aufweisen, auf denen die Losflansche 1 bzw. 1' aufliegen, so dass die Anpresskräfte so nahe wie möglich am Innenrohr auf die Bunde 91 bzw. 91' wirken. Innen sind die Rohrenden 9, 9' mit einer Schicht Chemieemail 92 bzw. 92' oder anders ausgekleidet. Zwischen den beiden Rohrenden 9, 9' ist eine Ringdichtung 90 angeordnet, die für eine Abdichtung sorgt.

Die Losflansche 1 und 1' sind mittels vier oder mehr Verbindungsschrauben 8 miteinander verschraubt, wobei hier nur eine eingezeichnet ist.

Deutlich erkennbar ist, dass die Innenseiten der Losflansche 1 und 1' eine zylinderförmige Seitenfläche 11 bzw. 11' und eine trichterförmige Abschrägung 12 bzw. 12' aufweisen.

Zu den vorbeschriebenen Losflanschen sind weitere konstruktive Variationen realisierbar. Hier ausdrücklich erwähnt seien noch:
- Die Anzahl der Verbindungsschraubenlöcher 4 bis 7 kann von vier an aufwärts nach Nennweite variieren.
- Der Losflansch muss nicht unbedingt flachzylinderförmig sein. Denkbar sind auch ebene Seitenflächen oder Mischformen.
- Anstelle von stufenartigen Profilen 21, 22, 31, 32 können beispielsweise zahnartige Profile verwendet werden.

## Patentansprüche

1. Zweiteiliger Losflansch (1) mit zwei sich in zwei Überlappungsbereichen überlappenden Flanschhälften (2, 3) und mindestens vier Schraubenlöchern (4 bis 7) für Verbindungsschrauben (8), die zur Verbindung des Losflansches (1) mit einem weiteren Losflansch (1') oder einem anderen Verbindungsteil dienen, wobei in beiden Überlappungsbereichen ein Verbindungsschraubenloch (4, 5) angeordnet ist, dadurch gekennzeichnet, dass die beiden Flanschhälften (2, 3) in den Überlappungsbereichen einen Stufenübergang in Form von stufen- oder zahnartig ineinandergreifenden Profilen (21, 22, 31, 32) zum Auffangen der beim Anziehen der Verbindungsschrauben (8) auf die Flanschhälften (2, 3) wirkenden Scherkräfte aufweisen, wobei mindestens ein Verbindungsschraubenloch (4, 5) durch einen Stufenübergang verläuft.

2. Zweiteiliger Losflansch (1) nach Anspruch 1, dadurch gekennzeichnet, dass mindestens ein Stufenübergang in einer Mittelachse des Losflansches (1) verläuft.

3. Zweiteiliger Losflansch (1) nach Anspruch 1 oder 2, dadurch gekennzeichnet, dass mindestens ein Stufenübergang parallel zur Verbindungslinie der Mittelpunkte der Verbindungsschraubenlöcher (4, 5) in den beiden Überlappungsbereichen verläuft.

4. Zweiteiliger Losflansch (1) nach einem der Ansprüche 1 bis 3, dadurch gekennzeichnet, dass neben den Verbindungsschraubenlöchern (4, 5) in den Überlappungsbereichen noch mindestens ein weiteres Verbindungsschraubenloch (6, 7) pro Flanschhälfte (2, 3) vorhanden ist.

5. Zweiteiliger Losflansch (1) nach einem der Ansprüche 1 bis 4, dadurch gekennzeichnet, dass die beiden Flanschhälften (2, 3) im wesentlichen baugleich sind.

6. Zweiteiliger Losflansch (1) nach einem der Ansprüche 1 bis 5, dadurch gekennzeichnet, dass die Innenseite des Losflansches (1) teilweise zylinderförmig und teilweise trichterförmig ausgebildet ist.

7. Zweiteiliger Losflansch (1) nach einem der Ansprüche 1 bis 6, dadurch gekennzeichnet, dass der Durchmesser der Verbindungsschraubenlöcher (4 bis 7) mindestens 14 mm ist.

8. Verwendung des Losflansches (1, 1') nach einem der Ansprüche 1 bis 7 zur Verbindung von stahlemaillierten oder anders ausgekleideten Bauteilen.

9. Verwendung nach Anspruch 8, dadurch gekennzeichnet, dass die Bauteile einen Rohrteil und einen Bund (91, 91') mit als Losflansch-Auflage dienender Ringschulter (911, 911') zur Krafteinleitung nahe des Rohrteils aufweisen, derart, dass der Losflansch (1, 1') bei der Verbindung zweier Bauteile nur auf der Ringschulter (911, 911') aufliegt und aussen um die Ringschulter (911, 911') herum zwischen Bund (91, 91') und Losflansch (1, 1') ein ringförmiger Spalt vorhanden ist.

10. Verwendung nach Anspruch 9, dadurch gekennzeichnet, dass der ringförmige Spalt grösser ist als die maximale Durchbiegung des Losflansches (1, 1') im Bereich des Bundes (91, 91') beim Anziehen der Verbindungsschrauben (8), so dass durch die Losflansche (1, 1') eine Rückstellkraft erzeugt wird.

11. Verwendung nach Anspruch 9 oder 10, dadurch gekennzeichnet, dass der verwendete Losflansch (1, 1') stabil und präzise hergestellt ist und formschlüssig am Rohrteil und an der Ringschulter (911, 911') anliegt.

## Claims

1. A two-piece loose flange (1) having two flange halves (2, 3), which overlap in two overlapping regions, and at least four screw holes (4 to 7) for connecting screws (8), which serve for connecting the loose flange (1) to a further loose flange (1') or another connecting part, it being the case that a connecting screw hole (4, 5) is arranged in the two overlapping regions, characterized in that the two flange halves (2, 3) have in the overlapping regions a step transition in form of profiles (21, 22, 31, 32) which interengage in a step-like or tooth-like manner and are intended for absorbing the shearing forces acting on the flange halves (2, 3) during tightening of the connecting screws (8), it being the case that at least one connecting screw hole (4, 5) runs through a step transition.

2. Two-piece loose flange (1) as claimed in claim 1, characterized in that at least one step transition runs in a center axis of the loose flange (1).

3. Two-piece loose flange (1) as claimed in claim 1 or 2, characterized in that at least one step transition runs parallel to the line connecting the center points of the connecting screw holes (4, 5) in the two overlapping regions.

4. Two-piece loose flange (1) as claimed in one of claims 1 to 3, characterized in that, in addition to the connecting screw holes (4, 5) in the overlapping regions, at least one further connecting screw hole (6, 7) is provided per flange half (2, 3).

5. Two-piece loose flange (1) as claimed in one of claims 1 to 4, characterized in that the two flange halves (2, 3) are of essentially identical construction.

6. Two-piece loose flange (1) as claimed in one of claims 1 to 5, characterized in that the inside of the loose flange (1) is of partially cylindrical and partially funnel-like design.

7. Two-piece loose flange (1) as claimed in one of claims 1 to 6, characterized in that the diameter of the connecting screw holes (4 to 7) is at least 14 mm.

8. Use of the loose flange (1, 1') as claimed in one of claims 1 to 7 for the purpose of connecting components which are steel-enameled or lined in some other way.

9. Use as claimed in claim 8, characterized in that the components have a pipe part and a collar (91, 91') with an annular shoulder (911, 911') which serves as loose flange support and is intended for the introduction of force in the vicinity of the pipe part, such that the loose flange (1, 1') rests just on the annular shoulder (911, 911') during the connection of two components, and an annular gap is provided on the outside, around the annular shoulder (911, 911'), between the collar (91, 91') and loose flange (1, 1').

10. Use as claimed in claim 9, characterized in that the annular gap is greater than the maximum bending of the loose flange (1, 1') in the region of the collar (91, 91') during tightening of the connecting screws (8), with the result that the loose flanges (1, 1') produce a restoring force.

11. Use as claimed in claim 9 or 10, characterized in that the loose flange (1, 1') used is produced in a stable and precise manner and butts against the pipe part and against the annular shoulder (911, 911') in a positively locking manner.

## Revendications

1. Bride rapportée en deux parties (1) avec deux moitiés de brides (2, 3) se recouvrant dans deux zones de recouvrement et avec au moins quatre trous (4 à 7) pour des boulons d'assemblage (8), qui servent à la liaison de la bride rapportée (1) avec une autre bride rapportée (1') ou avec un autre élément de liaison, un trou de boulon d'assemblage (4, 5) étant disposé dans les deux zones de recouvrement, caractérisée en ce que les deux moitiés de brides (2, 3) comprennent dans les zones de recouvrement une jonction échelonnée se composant de profils s'interpénétrant en forme de décrochements ou de dents (21, 22, 31, 32) pour la reprise des efforts de cisaillement agissant sur les moitiés de brides (2, 3) lors du serrage des boulons d'assemblage (8), au moins un trou de boulon d'assemblage (4, 5) passant par une jonction échelonnée.

2. Bride rapportée en deux parties (1) selon la revendication 1, caractérisée en ce qu'au moins une jonction échelonnée est située le long d'un axe central de la bride rapportée (1).

3. Bride rapportée en deux parties (1) selon la revendication 1 ou 2, caractérisée en ce qu'au moins une jonction échelonnée est située parallèlement à la ligne de liaison des points centraux des trous pour les boulons d'assemblage (4, 5) se trouvant dans les deux zones de recouvrement.

4. Bride rapportée en deux parties (1) selon l'une des revendications 1 à 3, caractérisée en ce que, en plus des trous pour les boulons d'assemblage (4, 5), les zones de recouvrement comptent encore au moins un autre trou de boulon d'assemblage (6, 7) pour chaque moitié de bride (2, 3).

5. Bride rapportée en deux parties (1) selon l'une des revendications 1 à 4, caractérisée en ce que les formes des deux moitiés de bride (2, 3) sont sensiblement les mêmes.

6. Bride rapportée en deux parties (1) selon l'une des revendications 1 à 5, caractérisée en ce que le coté intérieur de la bride rapportée (1) est configuré partiellement en forme de cylindre et partiellement en forme d'entonnoir.

7. Bride rapportée en deux parties (1) selon l'une des revendications 1 à 6, caractérisée en ce que le diamètre des trous pour les boulons d'assemblage (4 à 7) est d'au moins de 14 mm.

8. Utilisation de la bride rapportée (1, 1') selon l'une des revendications 1 à 7 pour relier des tubes émaillés en acier ou des composants munis d'un autre revêtement.

9. Utilisation selon la revendication 8, caractérisée en ce que, pour une introduction des contraintes à proximité de l'embout de tube, les composants comprennent un embout de tube et une collerette (91, 91') avec un épaulement circulaire (911, 911') servant de support à la bride rapportée, et ceci de manière à ce que, lors de la liaison de deux composants, la bride rapportée 1, 1' ne soit appuyée que sur l'épaulement circulaire (911, 911') et à ce qu'il existe à l'extérieur, autour de l'épaulement circulaire (911, 911'), une fente circulaire située entre la collerette (91, 91') et la bride rapportée (1, 1').

10. Utilisation selon la revendication 9, caractérisée en ce que la fente circulaire est plus importante que la flexion maximale de la bride rapportée (1, 1') qui se produit dans la zone de la collerette (91, 91') lors du serrage des boulons d'assemblage (8), une force de rappel étant ainsi produite par les brides rapportées (1, 1').

11. Utilisation selon la revendication 9 ou 10, caractérisée en ce que la bride rapportée utilisée (1, 1') est réalisée de manière robuste et précise et qu'elle est appliquée par complémentarité de forme sur l'embout de tube et sur l'épaulement circulaire (911, 911').
